# FASCICULE DE BREVET EUROPEEN

(11) **EP 0 578 547 B1**
(45) Date de publication et mention de la délivrance du brevet: **22.05.1996**
(21) Numéro de dépôt: 93401717.9
(22) Date de dépôt: 02.07.1993
(51) Int. Cl.: B62D 43/10

(54) **Système de retenue d'un cric et d'une roue de secours de véhicule automobile dans un logement**
System zum Festhalten von einem Wagenheber und einem Ersatzrad eines Kraftfahrzeuges in einem Lagerraum
Restraint system for a jack and a spare wheel of a motor vehicle in a storage space

(30) Priorité: 07.07.1992 FR 9208353
(43) Date de publication de la demande: 12.01.1994
(73) Titulaire: Société Anonyme dite: REGIE NATIONALE DES USINES RENAULT, F-92109 Boulogne Billancourt (FR)
(72) Inventeur: Carduner, Jean Jacques, F-95110 Sannois (FR); Thoumire, Pacal, F-78130 Les Mureaux (FR)
(74) Mandataire: Ernst-Schonberg, Michel

(56) Documents cités:
- DE-A- 3 045 071
- FR-A- 1 154 829
- FR-A- 2 657 836

## Description

L'invention concerne un système de retenue d'un cric et d'une roue de secours de véhicule automobile dans un logement délimité par une paroi de fond, une paroi latérale et dans lequel un moyen de fixation coopère à l'immobilisation simultanée de la roue et du cric dans leur logement.

La publication FR-A-2657836 décrit un système de retenue constitué par une plaque de recouvrement en appui sur la roue sous l'action de l'effort de serrage d'un écrou vissé sur une tige portée par la paroi de fond et qui s'étend verticalement à partir du fond au travers du voile de la roue et de ladite plaque.

Dans le but d'éviter les déplacements parasites de la roue dans son logement, générés notamment au cours des accélérations et décélérations brutales du véhicule, il est usuel de centrer la roue au contact d'une paroi du logement. Cette manière de procéder ne permet pas la retenue d'une roue dont les dimensions ne sont pas prédéfinies.

L'invention a pour objet un système de retenue simplifié de la roue de secours et du cric dans leur logement qui utilise avantageusement la roue comme moyen de calage du cric, les écarts dimensionnels étant rattrappés par un élément amortisseur disposé entre le cric et le fond du logement.

Selon l'invention le moyen de fixation est constitué par un système vis-écrou dans lequel la vis est en appui sur un élément de la paroi de fond du logement de la roue et traverse un support de cric monté en position d'appui décentrée sur la jante de ladite roue et dans lequel l'écrou est en appui sur le voile de la roue.

D'autres caractéristiques et avantages de l'invention apparaîtront à la lecture d'un mode de réalisation du système de retenue en référence au dessin annexé dans lequel:
- la figure 1 est une vue en coupe du logement de la roue de secours et de son système de retenue selon le plan vertical I-I défini à la figure 2.
- la figure 2 est une vue de dessus de la roue en partie écorchée, mise en place dans le logement au contact de son cric de montage.

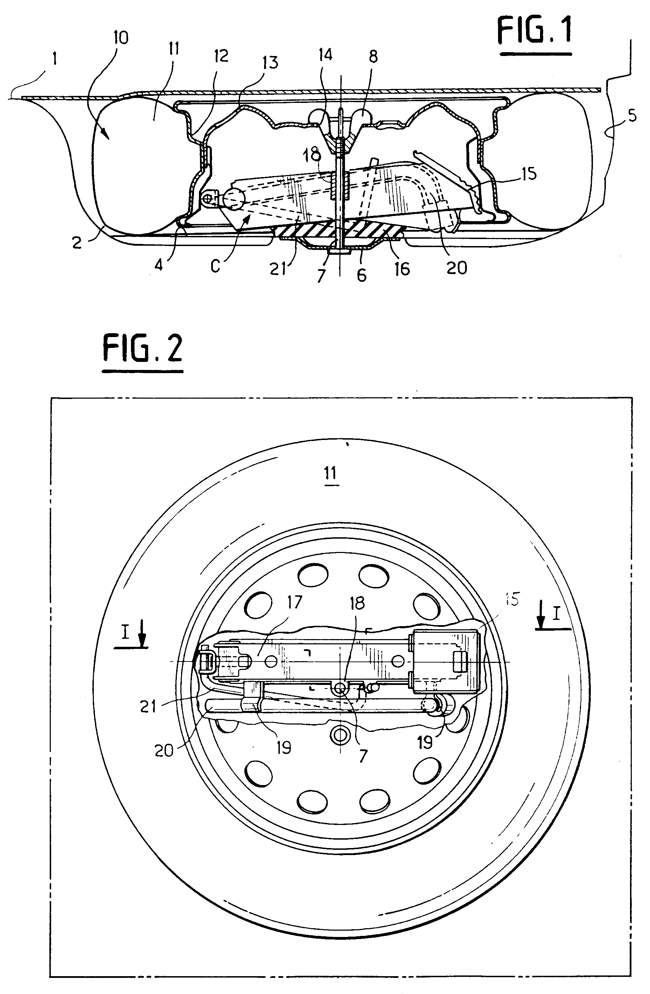

Ainsi que cela est montré aux figures 1 et 2, une carrosserie de véhicule automobile possède un panneau de plancher 1 sensiblement horizontal. Un logement 2 de la roue de secours est formé par emboutissage dans le panneau 1 et possède une paroi de fond 4 et une paroi latérale 5.

La paroi de fond 4 porte un renfort soudé 6 surmonté par une vis 7 qui s'étend verticalement suivant l'axe de la roue de secours 10 définie par son pneumatique 11 au contact de la paroi 4, par sa jante 12 et par son voile 13 muni d'un perçage de centrage 14 dont le bord extérieur constitue la surface d'appui de l'écrou 8 de retenue de la roue 10 dans le logement 2.

Selon une caractéristique de l'invention la vis 7 s'étend au travers du support 18 d'un cric, représenté en position pliée dans le logement 2 en appui sur une plaque amortisseur 16, centrée sur la vis 7.

Le cric désigné dans son ensemble par la référence C possède un pied de calage 15 et un montant 17 dont le flanc porte un support 18 à colliers 19 destinées au rangement et à l'immobilisation de l'outil 20 de démontage de la roue et à l'immobilisation de l'extrémité de la manivelle 21 de commande du cric.

La mise en place du cric C permet l'autocentrage de la roue 10 au contact du pied 15 du cric dans le logement 2 avant son immobilisation par l'écrou 8.

La roue 10 coince et immobilise de la sorte le cric entre sa jante 12 et la plaque amortisseur 16. Le système conforme à l'invention évite ainsi tout autre élément de fixation spécifique du cric.

Il est par ailleurs possible d'ajuster la distance entre le pied 15 et l'axe de la roue à la suite d'une modification des caractéristiques dimensionnelles de la roue 10 ou de la mise en place d'un cric différent.

## Revendications

1. Système de retenue d'un cric et d'une roue de secours de véhicule automobile dans un logement (2) délimité par une paroi de fond (4), une paroi latérale (5) et dans lequel un moyen de fixation assure l'immobilisation de la roue dans son logement, le moyen de fixation étant constitué par un système vis-écrou dans lequel la vis (7) est en appui sur un élément (6) de la paroi de fond (5) du logement (2) de la roue caractérisé par le fait que la vis (7) traverse un support (18) du cric monté en position d'appui décentrée sur la jante (12) de ladite roue de façon telle qu'il permet l'auto centrage de la roue (10) avant son immobilisation par l'écrou (8), et par le fait que l'écrou (8) est en appui sur le voile (13) de la roue.

2. Système de retenue selon l'une quelconque des revendications 1 ou 2, caractérisé par le fait que le cric (C) est autobloqué entre la roue de secours (10) et une plaque amortisseur (16) disposée entre le cric (C) et la paroi de fond (5).

3. Système de retenue selon l'une quelconque des revendications 1 ou 2, caractérisé par le fait que le cric possède un pied (15) qui assure ledit appui sur la jante (12), le cric (C) possèdant en outre un montant (17) qui porte un outil (20) de démontage de la roue et une manivelle (21) de manoeuvre dudit cric (C).

## Claims

1. A system for retaining a jack and a motor vehicle spare wheel in a housing (2) defined by a bottom wall (4) and a side wall (5) and in which a fixing means provides for immobilising the wheel in its housing, the fixing means being formed by a screw-nut system in which the screw (7) bears against an element (6) of the bottom wall (5) of the housing (2) for the wheel characterised in that the screw passes through a support (18) of the jack which is mounted in an off-centre support position on the rim (12) of said wheel in such a way that it permits self-centering of the wheel (10) before it is immobilised by the nut (8), and that the nut (8) bears against the centre portion (13) of the wheel.

2. A retaining system according to claim 1 characterised in that the jack (C) is self-locked between the spare wheel (10) and a damper plate (16) disposed between the jack (C) and the bottom wall (5).

3. A retaining system according to either one of claims 1 and 2 characterised in that the jack has a foot (15) which provides said support on the rim (12), the jack (C) also having an upright (17) which carries a tool (20) for removing the wheel and a handle (21) for operating said jack (C).

## Patentansprüche

1. System zur Halterung eines Wagenhebers und eines Reserverades eines Kraftfahrzeuges in einer Aussparung (2), die durch eine Bodenwand (4) und eine Seitenwand (5) begrenzt wird, wobei eine Befestigungsanordnung die Festlegung des Rades in der Aussparung gewährleistet, die aus einer Anordnung aus Mutter und Schraubbolzen besteht, wobei sich die Mutter (7) auf einem Teil (6) der Bodenwand (5) der Aussparung (2) für das Rad abstützt, dadurch gekennzeichnet, daß der Schraubbolzen einen Träger (18) des Wagenhebers durchsetzt, der in der Haltestellung außermittig zur Felge des Rades angeordnet ist, derart, daß er die Selbstzentrierung des Rades (10) vor dessen Festlegung mittels der Mutter (8) ermöglicht und daß sich die Mutter (8) auf der Radschüssel abstützt.

2. System zur Halterung nach Anspruch 1, dadurch gekennzeichnet, daß der Wagenheber (C) sich selbst festklemmt zwischen dem Reserverad (10) und einer Dämpfungsplatte (16), die zwischen dem Wagenheber (C) und der Bodenwand (5) angeordnet ist.

3. System zur Halterung nach einem der Ansprüche 1 oder 2, dadurch gekennzeichnet, daß der Wagenheber einem Fuß (15) aufweist, der das Abstutzen auf der Felge (12) ermöglicht und daß der Wagenheber (C) außerdem eine Stütze (17) aufweist, die ein Abnehmwerkzeug (20) für das Rad und eine Handkurbel (21) für den Wagenheber (C) trägt.
